# EUROPÄISCHE PATENTSCHRIFT

(11) **EP 1 706 655 B1**
(45) Veröffentlichungstag und Bekanntmachung des Hinweises auf die Patenterteilung: **12.10.2016**
(21) Anmeldenummer: 05701001.9
(22) Anmeldetag: 18.01.2005
(51) Int. Cl.: F16C 13/02, F16C 33/74, B21B 31/07, F16J 15/324, F16J 15/3236

(54) **VORRICHTUNG ZUR BALLENSEITIGEN ABDICHTUNG DES LAGERS EINES WALZENZAPFENS**
DEVICE FOR SEALING THE BALL SIDE OF A BEARING OF A ROLLER STUD
DISPOSITIF POUR ETANCHEIFIER LE COUSSINET D'UN TOURILLON DE CYLINDRE COTE TABLE

(30) Priorität: 23.01.2004 DE 102004003763
(43) Veröffentlichungstag der Anmeldung: 04.10.2006
(73) Patentinhaber: SMS group GmbH, 40237 Düsseldorf (DE)
(72) Erfinder: ROEINGH, Konrad, 57271 Hilchenbach (DE); KELLER, Karl, 57271 Hilchenbach (DE); SCHEFFE, Kurt, 57271 Hilchenbach (DE)
(74) Vertreter: Klüppel, Walter
(86) Internationale Anmeldenummer: PCT/EP2005/000427
(87) Internationale Veröffentlichungsnummer: WO 2005/071278

(56) Entgegenhaltungen:
- EP-A- 1 038 601
- DE-A1- 2 414 634
- DE-A1- 10 113 593
- DE-U1- 29 805 241
- FR-A- 2 676 943
- US-A- 4 679 801
- PATENT ABSTRACTS OF JAPAN Bd. 1997, Nr. 06, 30. Juni 1997 (1997-06-30) -& JP 09 049572 A (KOYO SEIKO CO LTD; KAWASAKI STEEL CORP), 18. Februar 1997 (1997-02-18)

## Beschreibung

Die Erfindung betrifft eine Vorrichtung zur ballenseitigen Abdichtung des Lagers eines Walzenzapfens mit auf den Walzenzapfen aufgezogener Zapfenbuchse, der ein Laufring zugeordnet ist, einer in einem Einbaustück gelagerten Lagerbuchse, dem Einbaustück über eine Halterung zugeordnete Radialwellendichtungen mit Radiallippen, die mit dem Laufring zusammenwirken und einer zum Ballen der Walze, den Radialwellendichtungen vorgeordneter Dichtungsanordnung. Alternativ findet anstelle eines Gleitlagers eine Wälzlageranordnung Anwendung.

Zum Abdichten von Lagern eines Zapfens einer Walzwerkswalze sind im Wesentlichen zwei unterschiedliche Konzepte bekannt. Das eine Konzept arbeitet mit einer Zapfenwellendichtung, die mit der Walze rotiert, und deren Dichtungslippen sich fliekraftbedingt bei unterschiedlichen Drehzahlen unterschiedlich stark an die Gegenlauffläche andrücken. Dabei kann es zu erhöhter Wärmeentwicklung kommen, die den Gummiwerkstoff der Zapfendichtung in seiner Flexibilität, im Volumen und seiner Härte negativ beeinflusst, so dass diese Dichtungen nur für ein kleines Betriebsfenster optimal ausgelegt sind.

Das zweite Konzept arbeitet mit feststehenden Radialwellendichtungen, bei der keine Fliehkraftprobleme auftreten. Eine solche Vorrichtung zur ballenseitigen Abdichtung des Lagers eines Walzenzapfens ist beispielsweise der DE 101 13 593 A1 entnehmbar. Diese Dichtungsvorrichtung besteht aus verhältnismäßig vielen Einzelteilen, wobei u. a. auch zwei Radialwellendichtungen eingesetzt sind. Da jede der Radialwellendichtungen ungefähr so teuer ist wie die Zapfendichtung nach dem ersten Konzept, ist diese Vorrichtung zum ballenseitigen Abdichten des Lagers eines Walzenzapfens sehr teuer. Hinzu kommt, dass die vielen einzelnen Teile dieser Dichtung, aufwendig zusammengebaut werden müssen, so dass sich dadurch eine umständliche Handhabung beim Zusammenbau und Warten der Dichtungsvorrichtung ergibt, die zudem diese Vorrichtung weiterhin verteuert. Außerdem ist den Radialwellendichtungen zum Walzenballen hin lediglich ein Labyrinth vorgeordnet, welches die Radialwellendichtungen nicht immer zuverlässig vor von der Walze stammenden Verunreinigungen wie Zunder schützt. Weiter ist zur Schmierung der Dichtung mit Öl ein Zu- und Ablaufkanal vorgesehen, der im Bereich zwischen den beiden Radialwellendichtungen endet.

Die DE 296 20 018 U1 offenbart eine Dichtungsvorrichtung, die jedoch ebenfalls aus vielen einzelnen Elementen zu einer Einheit zusammengesetzt wird. Damit ist auch hier der Wechsel einer Abdichtungsvorrichtung aufwendig und der Zusammenbau der Vorrichtung zur ballenseitigen Abdichtung kostenintensiv.

Die JP 09 049 572 A offenbart einen Walzenzapfen der mittels einer Wälzlageranordnung gelagert ist. Die Dichtungsvorrichtung weist eine Halterung und eine fettgeschmierte Radialwellendichtung mit zwei an einem Fortsatz angeordneten Radialdichtlippen auf, wobei das Fett aus einem Behälter zwischen den beiden Radialdichtlippen führbar ist.

Die US 4 679 801 A offenbart eine Vorrichtung zur ballenseitigen Abdichtung des Lagers eines Walzenzapfens, wobei eine dauergeschmierte Lippendichtung mit zwei Radiallippen und einer Axiallippe einer Labyrinthdichtung vorgeordnet ist. Weiter sind Kanäle zur Beaufschlagung der Labyrinthdichtung mit Luft vorgesehen.

Der Erfindung liegt die Aufgabe zugrunde, eine gattungsgemäße Vorrichtung so weiterzubilden und zu optimieren, dass sie kostengünstig zu erstellen und zu betreiben ist, nur aus wenigen Teilen besteht und eine bessere Dichtwirkung hervorruft.

Zur Lösung der Aufgabe wird eine Vorrichtung zur ballenseitigen Abdichtung des Lagers eines Walzenzapfens mit einem Gleitlager mit den Merkmalen des Anspruchs 1 vorgeschlagen. Alternativ dazu eine derartige Vorrichtung mit einer Wälzlageranordnung mit den Merkmalen des Anspruchs 10.

Erfindungsgemäß bilden die Halterung, die Radiallippen und die Dichtungsanordnung eine Einheit, die lösbar mit dem Einbaustück gedichtet verbunden ist.

Dabei handelt es sich bei der Dichtungsanordnung nicht nur um ein Labyrinth, sondern zusätzlich um eine Dichtungslippe, die mit den Radiallippen und der Halterung eine Einheit bilden. Dadurch wird anstatt einer mehrteiligen Halterung und den zweiteiligen Radialwellendichtungen lediglich ein Element benötigt, welches zudem noch als Dichtungsanordnung eine weitere Dichtungslippe aufweist, welche die Radiallippen vor von der Walzenoberfläche stammenden Verunreinigungen schützt.

Es hat sich bewährt, dass die Halterung, die Radiallippen und die Dichtungsanordnung einstückig ausgebildet sind. Damit ist gewährleistet, dass tatsächlich nur ein Element, welches sowohl der Halterung als auch der Dichtung dient, mit dem Einbaustück zu verbinden ist.

Es besteht aber auch die Möglichkeit, dass die Halterung und die Radiallippen einstückig als Dichtungselemente ausgebildet sind und dass die Dichtlippe der Dichtungsanordnung lösbar mit dem Dichtungselement verbindbar ist.

Insbesondere, wenn sich unterschiedlicher Verschleiß zwischen der Dichtlippe der Dichtungsanordnung und den Radiallippen des Dichtungselementes ergeben sollten, besteht die Möglichkeit, die hier mit dem Zunder verstärkt in Berührung kommende Dichtlippe der Dichtungsanordnung vom Dichtungselement zu lösen und gegen eine neue Dichtlippe auszutauschen. Damit wird zwar in Kauf genommen, dass wieder ein weiteres Teil für die Vorrichtung zum ballenseitigen Abdichten des Lagers eines Walzenzapfens notwendig wird, gegenüber der Vorrichtung nach dem Stand der Technik stellen diese beiden Teile jedoch eine erheblich geringere Anzahl von Teilen dar.

Bemerkenswert ist, dass die Halterung und die Radiallippen und/oder die Dichtlippe der Dichtungsanordnung aus unterschiedlichen Materialien bestehen. Das wird dadurch erreicht, dass bei der Herstellung der Dichtungsvorrichtung in die entsprechende Herstellungsform in dem Bereich, der zur Halterung dient, andere Materialien eingefügt werden als im Bereich der Radiallippen und ggf. auch andere Materialien im Bereich der Dichtlippe der Dichtungsanordnung anwendung finden, die alle z.B. durch Vulkanisieren miteinander verbunden sind, so dass die erfindungsgemäße Vorrichtung auf die in den jeweiligen Bereichen anstehenden Anforderungen speziell ausgebildet sein kann.

Als Materialien für die Halterung kommen z.B. Stahl, Aluminium, Kunststoff sowie Hartgummi in Frage, während die Radiallippen und/oder die Dichtlippe der Dichtungsanordnung aus Acrylnitryl-Butadien-Kautschuk, Hydrierter Acrylnitryl-Butadien-Kautschuk, Fluor-Kautschuk, Polytetrafluorethylen sowie Polyurethan sein können.

Erfindungsgemäß weist das Dichtungselement an der Halterung einen Fortsatz auf, an dessen Enden die Radiallippen angeordnet sind, die mit dem Laufring in Dichtverbindung stehen. Es werden vorzugsweise zwei Radiallippen vorgesehen, die voneinander fortweisend oder gleichgerichtet ausgebildet sind. Damit werden an einem Fortsatz zwei Dichtlippen realisiert. Es werden nicht mehr zwei unterschiedliche Radialwellendichtungen benötigt.

Bedeutsam ist, dass die Halterung und/oder die Radiallippen und/oder die Dichtlippe Armierungen aufweisen. Dabei kann die Halterung des Dichtungselementes zur Versteifung des gesamten Elements Armierungen aufweisen, während die Radiallippen steife Federn oder Rundstahlelemente mit definierter Länge aufweisen, damit gleichbleibende Anpreßdücke über die Lebensdauer des Dichtungselements gewährleistet sind. Die Dichtungslippe der Dichtungsanordnung kann beispielsweise durch Verstärkungsfasern armiert sein.

Erfindungsgemäß weisen die Halterung und der Fortsatz eine erste Verbindung auf, über welche geringe Mengen Öls zum Zwecke der Minimalmengenschmierung der lagerabgewandten Dichtlippe aus einer Öl-Fangtasche im Bereich des Lagers in den Bereich zwischen die beiden Radiallippen führbar ist und dass zumindest der Fortsatz eine zweite Verbindung aufweist, über welche überschüssiges Öl aus dem Bereich zwischen den Dichtlippen abführbar ist.

Die lagerseitige Radiallippe wird regelmäßig durch das aus dem Lager austretende Öl ausreichend geschmiert. Die dahinter liegende walzenseitige Radiallippe wird dagegen regelmäßig nicht geschmiert. Diese Radiallippe könnte im Betrieb verbrennen. Aus diesem Grunde wird, auch wenn z. B. nur ein Tropfen Öl pro Stunde notwendig ist, dieses Öl durch die erste Verbindung der walzenseitigen Radiallippe zugeführt. Sollte sich ergeben, dass zuviel Öl über diese erste Verbindung in den Bereich zwischen den beiden Radiallippen gelangt, so dass diese eventuell aufschwimmen könnten und dann nicht mehr richtig dichten würden, ist eine weitere Verbindung vorgesehen, über welche überschüssiges Öl aus dem Bereich zwischen den Radiallippen abführbar ist.

Zweckmäßig wird bei eingebautem Dichtungselement die erste Verbindung im jeweiligen oberen Bereich der Radiallippe bei ca. 12 Uhr und die zweite Verbindung im jeweiligen unteren Bereich kurz vor oder kurz nach 6 Uhr angeordnet. Dadurch wird erreicht, dass die Öltropfen im oberen Bereich den Radiallippen zugeführt werden und allein durch Schwerkraft nach unten gelangen können. Hinzu kommt, dass der Laufring auf den Radiallippen dreht und dabei das Öl verteilen kann.

Überschüssiges Öl wird aus dem unteren Bereich der Radiallippen abgeführt. Diese sind jedoch nicht bei 6 Uhr, d. h. im untersten Bereich angeordnet sondern kurz vor oder nach 6 Uhr, so dass stets ein kleiner Ölsumpf vorhanden ist, der so bemessen ist, dass die Radiallippen nicht aufschwimmen, aber eine Minimalmengenschmierung gewährleistet ist.

Erfindungsgemäß ist über die Größe der Öffnung der Öl-Fangtasche die Menge der aufgefangenen Öl-Partikel einstellbar, und dass durch die Schräglage und die Tiefe der Öl-Fangtasche die Menge des in der Öl-Fangtasche bevorratbaren Öls festlegbar ist. Durch diese Maßnahme und vor allem durch die Wahl des Durchmessers der ersten Verbindung ist die Menge des zu den Radiallippen des Dichtungselementes gelangenden Öls einstellbar.

Es empfiehlt sich außerdem, dass die Dichtungsanordnung mit einem L-förmigen Profil zusammenwirkt, welches an der Stirnseite der Walze montiert ist. Die Dichtlippe der Dichtungsanordnung kann an dem L-förmigen Profil anliegen, welches mit der Walze dreht. Die Dichtlippe der Dichtungsanordnung kann dabei bestenfalls das L-förmige Profil, welches auswechselbar mit der Walze verbunden ist, durch Reibung beanspruchen. Die Walze wird dabei nicht beansprucht.

Weiterhin ist es ratsam, dass zwischen den Schenkeln des L-förmigen Profils und dem Dichtungselement ein Labyrinth ausgebildet ist. Dadurch wird zusätzlich zu der Dichtlippe der Dichtungsanordnung eine, wie aus dem Stand der Technik bekannte, Dichtungsanordnung in Form eines Labyrinths gebildet. Die Radiallippen des Dichtungselements werden damit doppelt geschützt.

Von Vorteil ist, wenn das Dichtungselement am Einbaustück so justierbar ist, dass ein sich beim Walzen einstellender Offset ausgeglichen ist. Dieser Offset entsteht durch die Walzkraft beim Walzvorgang. Die Walzenzapfen sitzen dabei nicht mittig in der Lagerbuchse. Durch die Justierungsmöglichkeit des Dichtungselementes kann dieses so eingestellt werden, dass es, wie der Zapfen der Walze außermittig zur Lagerbuchse angeordnet ist, so dass das Dichtungselement zum Walzenzapfen damit mittig vorgesehen ist.

Die Erfindung wird anhand einer Zeichnung näher erläutert.

Dabei zeigen:
- Figur 1: die erfindungsgemäße Vorrichtung mit einstückig ausgebildeter Halterung, Radiallippen und Dichtlippe der Dichtungsanordnung,
- Figur 2: den unteren Ausschnitt der Radiallippen mit Darstellung der zweiten Verbindung,
- Figur 3: die Vorrichtung nach Fig. 1 mit einstückiger Dichtlippe jedoch anderen Materials, und
- Figur 4: die erfindungsgemäße Vorrichtung mit einstückig ausgebildeter Halterung und Radiallippen jedoch mit lösbarer Dichtlippe der Dichtungsanordnung.

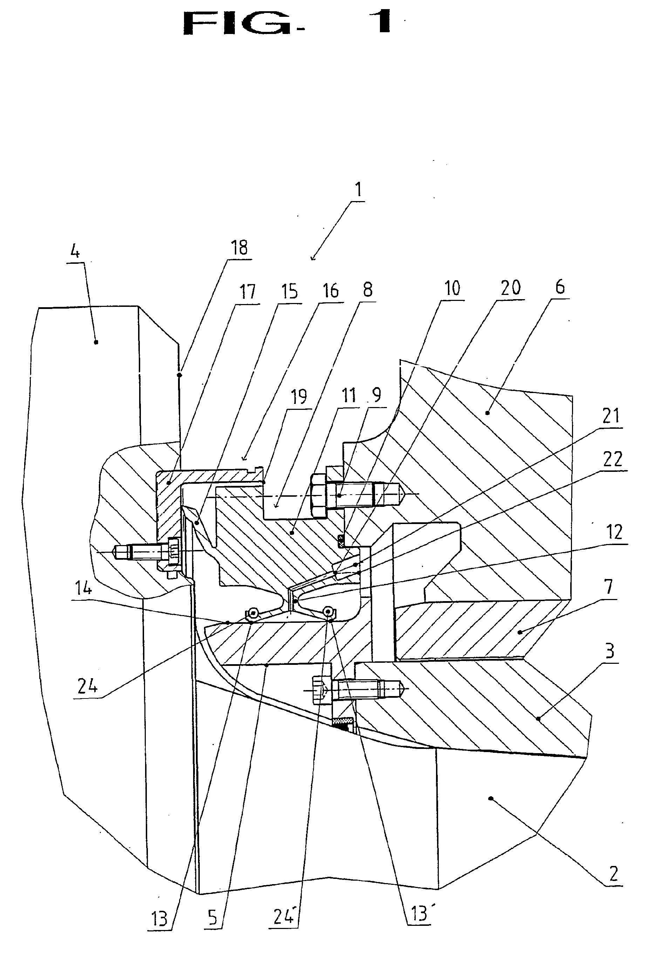

Die Figur 1 zeigt eine Vorrichtung 1 zur ballenseitigen Abdichtung des Lagers eines Walzenzapfens 2. Auf dem Walzenzapfen 2 einer Walze 4 sitzt die Zapfenbuchse 3. Mit der Zapfenbuchse 3 ist ein Laufring 5 verbunden, hier verschraubt. Der Laufring 5 kann aber auch mit der Walze 4 verbunden sein. Die Walze 4 wird in einem Einbaustück 6, das mit einer Lagerbuchse 7 ausgestattet ist getragen.

Am Einbaustück 6 ist ein Dichtungselement 8 mittels Schrauben 9 lösbar verbunden. Eine Ringdichtung 10, der auch Bestandteil des Dichtungselementes 8 sein kann, sorgt dafür, dass das Öl, welches zwischen der Lagerbuchse 7 und der Zapfenbuchse 3 austritt, nicht über einen Spalt zwischen dem Dichtungselement 8 und dem Einbaustück 6 zur Walze 4 gelangen kann. Das Dichtungselement 8 besteht aus einer Halterung 11, einem Fortsatz 12 und am Ende des Fortsatzes 12 aus zwei voneinander fortweisenden Radiallippen 13, 13'. Die Radiallippen 13, 13' liegen an einer Dichtfläche 14 des Laufrings 5 an.

Das Dichtungselement 8 weist einstückig mit der Halterung 11 verbunden eine Dichtlippe 15, die zu einer Dichtungsanordnung 16 gehört. Die Dichtungsanordnung 16 umfasst weiterhin ein L-förmiges Profil 17, welches mit der Stirnseite 18 der Walze 4 verschraubt ist. Die Dichtlippe 15 liegt dabei an einem Schenkel des L-förmigen Profils 17 dichtend an. Der zweite Schenkel des L-förmigen Profils 17 bildet mit einem Bereich des Dichtungselementes 8 ein Labyrinth 19 aus. Das Labyrinth 19 und die Dichtlippe 15 bilden die Dichtanordnung 16.

In der Halterung 11 und dem Fortsatz 12 ist eine Verbindung 20 angeordnet, über welche Öl aus dem Lager zwischen der Lagerbuchse 7 und der Zapfenbuchse 3 in den Bereich zwischen die Radiallippen 13, 13' gelangen kann. Dazu ist in der Halterung 11 eine Öl-Fangtasche 21 ausgebildet. Die Verbindung 20 und die Öl-Fangtasche 21 sind im oberen Bereich des Dichtungselements 8 bei ca. 12 Uhr angeordnet. Die Öl-Fangtasche 21 ist seitlich in die Halterung 11 als schräg nach unten verlaufendes Sackloch angeordnet. Die untere Kante 22 der Sacklochöffnung dient gleichzeitig als Überlauf, so dass durch die Schräge des Sacklochs und die Höhe der unteren Kante 22 zum Fuß des Sacklochs der Ölstand in der Öl-Fangtasche 21 bestimmt wird. Die Öl-Fangtasche 21 kann dabei als rundes oder ovales Sackloch ausgebildet sein, wobei die untere Kante 22 dabei möglichst als eine gerade, tangential sich erstreckende Kante ausgebildet sein sollte.

Das in der Öl-Fangtasche 21 aufgefangene Öl kann über die Verbindung 20 in den Bereich zwischen die Radiallippen 13, 13' gelangen. Hier dient es zur Schmierung der Radiallippe 13. Die Radiallippe 13' wird direkt vom Öl aus dem Lager geschmiert.

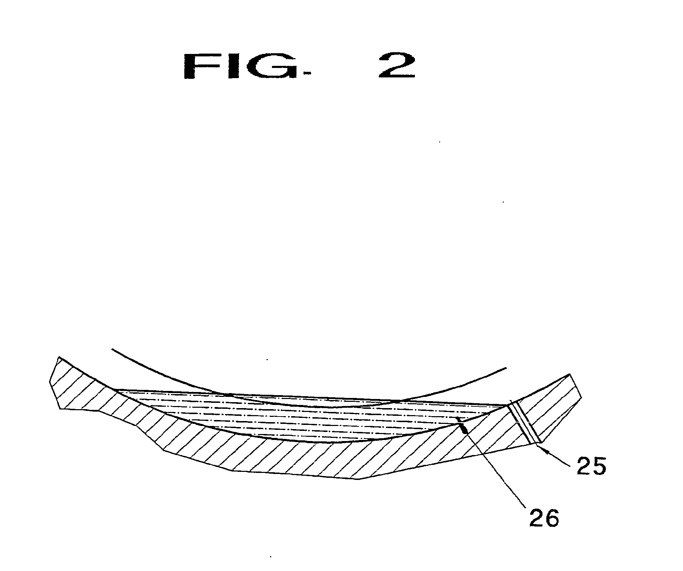

Figur 2 zeigt, dass am unteren Ende des Dichtungselementes 8 eine weitere Verbindung 25 vorgesehen ist, über die überschüssiges Öl aus dem Bereich zwischen den Radiallippen 13, 13' und der Dichtfläche 14 abfließen kann. Dabei ist die weitere Verbindung 25 so angeordnet, dass sich ein kleiner Ölsumpf 26 im Bereich zwischen den Radiallippen 13, 13' und der Dichtfläche 14 halten kann.

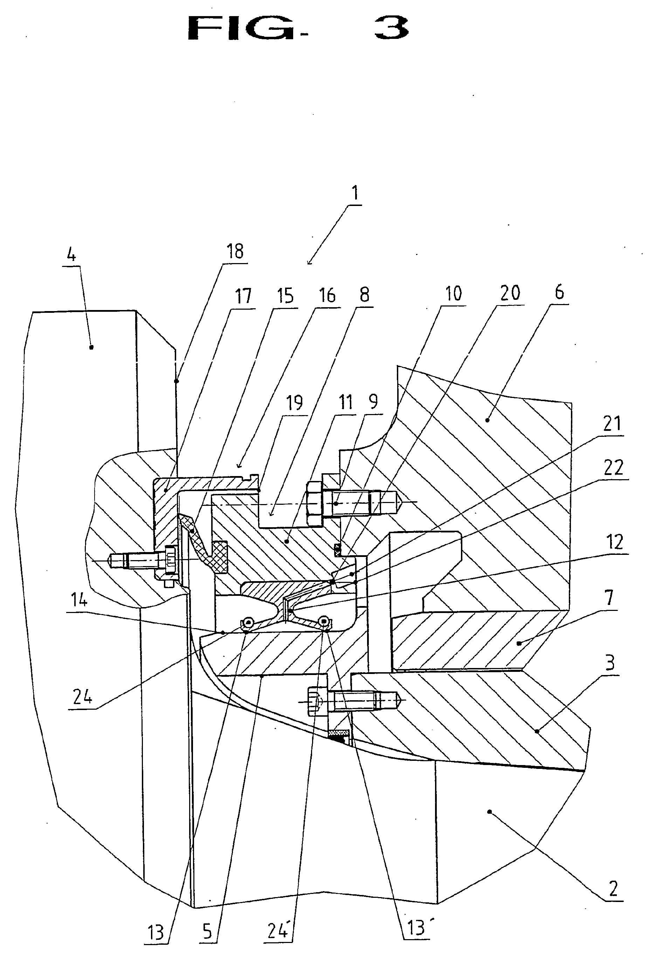

Figur 3 zeigt, dass das Dichtungselement 8 und die Dichtlippe 15 zwar auch noch einstückig hergestellt sind, dass die Dichtlippe 15 jedoch aus einem anderen Material (dargestellt durch eine verschiedene Schraffur) besteht als das Dichtungselement 8.

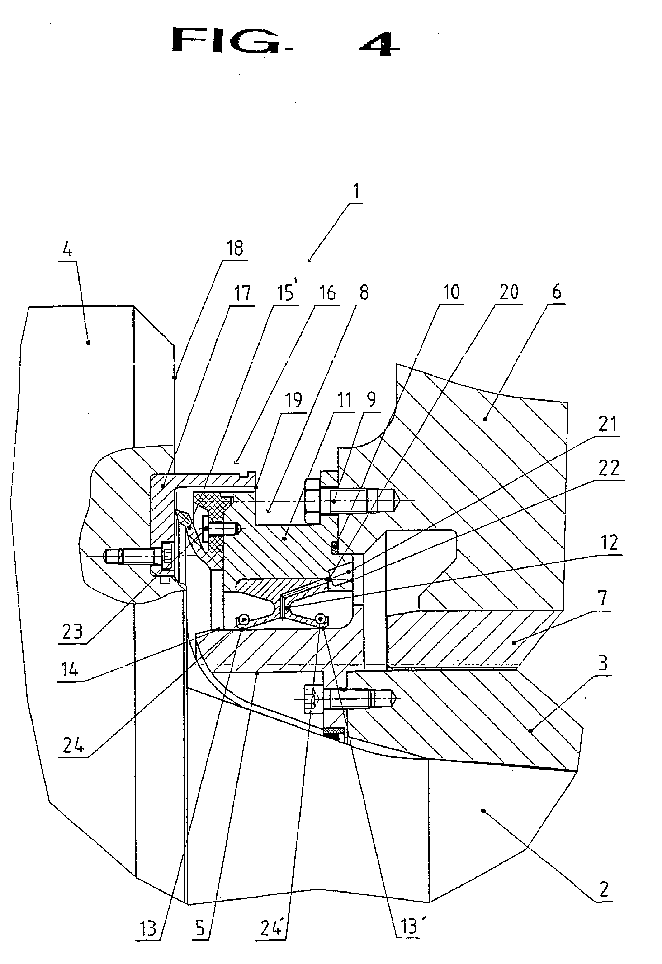

Figur 4 zeigt, dass das Dichtungselement 8 lediglich aus der Halterung 11, dem Fortsatz 12 und den Radiallippen 13, 13' besteht. Die Dichtlippe 15' ist über Schrauben 23 mit der Halterung 11 des Dichtelements 8 verbunden. Damit lässt sich die Dichtlippe 15', die regelmäßig einem größerem Verschleiß als die Radiallippen 13, 13' unterliegt, separat austauschen.

Nicht gezeigt ist, dass die Halterung 11 Armierungen aufweisen kann und dass die Radiallippen 13, 13' zur Verstärkung eine Beschichtung aufweisen oder wie auch die Dichtlippe 15, 15' mit Verstärkungsfasern durchzogen ist.

Die Radiallippen 13, 13' werden über steife Federn 24, 24' oder Rundstahlelemente derart in Form gehalten, dass stets eine optimale Dichtwirkung zwischen der Dichtfläche 14 und den Radiallippen 13, 13' gewährleistet ist.

### Bezugszeichenübersicht

- 1.: Vorrichtung
- 2.: Walzenzapfen
- 3.: Zapfenbuchse
- 4.: Walze
- 5.: Laufring
- 6.: Einbaustück
- 7.: Lagerbuchse
- 8.: Dichtungselement
- 9.: Schrauben
- 10.: Ringdichtung
- 11.: Halterung
- 12.: Fortsatz
- 13.: Radiallippen
- 14.: Dichtfläche
- 15.: Dichtlippe
- 16.: Dichtungsanordnung
- 17.: L-förmiges Profil
- 18.: Stirnseite
- 19.: Labyrinth
- 20.: Verbindung
- 21.: Öl-Fangtasche
- 22.: Kante
- 23.: Schrauben
- 24.: Feder
- 25.: Verbindung
- 26.: Ölsumpf

## Patentansprüche

1. Vorrichtung (1) zur ballenseitigen Abdichtung des Lagers eines Walzenzapfens (2) mit auf den Walzenzapfen (2) aufgezogener Zapfenbuchse (3), der ein Laufring (5) zugeordnet ist, einer in einem Einbaustück (6) gelagerten Lagerbuchse (7), dem Einbaustück (6) über eine Halterung (11) zugeordnete Radialwellendichtungen mit Radiallippen (13,.13'), die mit dem Laufring (5) zusammen wirken und einer zum Ballen der Walze (4) den Radialwellendichtungen vorgeordneter Dichtungsanordnung (16), wobei die Halterung (11) und die Radiallippen (13, 13') einstückig als Dichtungselement (8) ausgebildet sind, und mit einer Dichtlippe (15, 15') der Dichtungsanordnung (16) eine Einheit bilden, die lösbar mit dem Einbaustück (6) gedichtet verbunden ist, und wobei die Halterung (11) einen Fortsatz (12) aufweist, an dessen Ende die Radiallippen (13, 13') angeordnet sind, die mit dem Laufring (5) in Dichtverbindung stehen, und die Halterung (11) und der Fortsatz (12) eine erste Verbindung (20) aufweisen, über welche geringe Mengen Öls zum Zwecke einer Minimalmengenschmierung der lagerabgewandten Radiallippe (13) aus einer Öl-Fangtasche (21) im Bereich des Lagers in den Bereich zwischen die beiden Radiallippen (13, 13') führbar ist, und dass zumindest der Fortsatz (12) eine zweite Verbindung (25) aufweist, über welche überschüssiges Öl aus dem Bereich zwischen den Radiallippen (13, 13') abführbar ist, und wobei über die Größe der Öffnung der Öl-Fangtasche (21) die Menge der aufgefangenen Öl-Partikel einstellbar ist, und durch die Schräglage und die Tiefe der Öl-Fangtasche (21) die Menge des in der Öl-Fangtasche (21) bevorratbaren Öls festlegbar ist.

2. Vorrichtung nach Anspruch 1,
**dadurch gekennzeichnet,**
**dass** das Dichtungselement (8) und die Dichtlippe (15) der Dichtungsanordnung (16) einstückig ausgebildet sind.

3. Vorrichtung nach Anspruch 1,
**dadurch gekennzeichnet,**
**dass** die Dichtlippe (15') der Dichtungsanordnung (16) lösbar mit dem Dichtungselement (8) verbindbar ist.

4. Vorrichtung nach einem der Ansprüche 1 bis 3,
**dadurch gekennzeichnet,**
**dass** die Halterung (11) und/oder die Radiallippen (13, 13') und/oder die Dichtlippe (15, 15') der Dichtungsanordnung (16) aus unterschiedlichen Materialien bestehen.

5. Vorrichtung nach einem der Ansprüche 1 bis 4,
**dadurch gekennzeichnet,**
**dass**. die Halterung (11) und/oder die Radiallippen (13, 13') und/oder die Dichtlippe (15, 15') Armierungen aufweisen.

6. Vorrichtung nach Anspruch 5,
**dadurch gekennzeichnet,**
**dass** bei eingebautem Dichtungselement (8) die erste Verbindung (20) im jeweilig oberen Bereich der Radiallippen (13, 13') bei ca. 12 Uhr angeordnet ist und dass die zweite Verbindung (25) im jeweiligen unteren Bereich der Radiallippen (13, 13') kurz vor oder kurz nach 6 Uhr angeordnet sind.

7. Vorrichtung nach einem der Ansprüche 1 bis 6,
**dadurch gekennzeichnet,**
**dass** die Dichtungsanordnung (16) ein L-förmiges Profil (17) aufweist, welches an der Stirnseite (18) der Walze (4) montiert ist, dass zwischen den Schenkeln des L-förmigen Profils (17) und dem Dichtungselement (8) ein Labyrinth (19) ausgebildet ist, und dass die Dichtlippe (15, 15') an einem Schenkel des L-förmiges Profils (17).dichtend anliegt.

8. Vorrichtung nach einem der Ansprüche 1 bis 7,
**dadurch gekennzeichnet,**
**dass** das Dichtungselement (8) zum Zwecke des Offset-Ausgleichs am Einbaustück (6) justierbar ist.

9. Vorrichtung nach Anspruch 8,
**dadurch gekennzeichnet,**
**dass** das Dichtungselement (8) im Einbaustück (6) um einen festen Betrag außermittig angeordnet ist.

10. Vorrichtung nach einem der Ansprüche 1 bis 9,
**dadurch gekennzeichnet,**
**dass** anstelle der Zapfenbuchse und der Lagerbuchse eines Gleitlagers eine Wälzlageranordnung Anwendung findet.

## Claims

1. Device (1) for barrel-side sealing of the bearing of a roll pin (2) with a pin bush (3) which is drawn onto the roll pin (2) and with which a guide ring (5) is associated, a bearing bush (7) mounted in a chock (8), radial shaft seals, which are associated with the chock (6) by way of a retainer (11), with radial lips (13, 13') which co-operate with the guide ring (5), and a sealing arrangement (16) arranged upstream of the radial shaft seals with respect to the barrel of the roll (4), wherein the retainer (11) and the radial lips (13, 13') are formed integrally as a sealing element (8) and form together with a sealing lip (15, 15') of the sealing arrangement (16) a unit which is sealingly and detachably connected with the chock (6), and wherein the retainer (11) has a prolongation (12), at the end of which the radial lips (13, 13') are arranged, the radial lips being in sealing connection with the guide ring (5), and the retainer (11) and the prolongation (12) have a first connection (20) by way of which small quantities of oil for the purpose of minimal quantity lubrication of the radial lip (13) remote from the bearing can be conducted from an oil collecting pocket (21) in the region of the bearing into the region between the two radial lips (13, 13'), and that at least the prolongation (12) has a second connection (25) by way of which excess oil can be conducted away from the region between the radial lips (13, 13'), and wherein the quantity of collected oil particles is settable by way of the size of the opening of the oil collecting pocket (21), and the quantity of oil able to be stored in the oil collecting pocket (21) is fixable by the inclined position and the depth of the oil collecting pocket (21).

2. Device according to claim 1, **characterised in that** the sealing element (8) and the sealing lip (15) of the sealing arrangement (16) are formed integrally.

3. Device according to claim 1, **characterised in that** the sealing lip 15' of the sealing arrangement (16) is detachably connectible with the sealing element (8).

4. Device according to any one of claims 1 to 3, **characterised in that** the retainer (11) and/or the radial lips (13, 13') and/or the sealing lip (15, 15') of the sealing arrangement (16) consists or consist of different materials.

5. Device according to any one of claims 1 to 4, **characterised in that** the retainer (11) and/or the radial lips (13, 13') and/or the sealing lip (15, 15') has or have reinforcements.

6. Device according to claim 5, **characterised in that** when the sealing element (8) is installed the first connection (20) is arranged in the respective upper region of the radial lips (13, 13') at approximately 12 o'clock and that the second connection (25) is arranged in the respective lower region of the radial lips (13, 13') shortly before or shortly after 6 o'clock.

7. Device according to any one of claims 1 to 6, **characterised in that** the sealing arrangement (16) has an L-shaped profile (17) which is mounted at the end (18) of the roller (4), that a labyrinth (19) is formed between the limbs of the L-shaped profile (17) and the sealing element (8), and that the sealing lip (15, 15') bears with sealing effect against a limb of the L-shaped profile (17).

8. Device according to any one of claims 1 to 7, **characterised in that** the sealing element (8) is adjustable for the purpose of compensation for offset at the chock (6).

9. Device according to claim 8, **characterised in that** the sealing element (8) is arranged in the chock (6) to be off-centre by a fixed amount.

10. Device according to any one of claims 1 to 9, **characterised in that** a roller bearing arrangement is used instead of the pin bush and the bearing bush of a slide bearing.

## Revendications

1. Dispositif (1) pour l'étanchéisation, du côté du corps du cylindre, du palier d'un tourillon de cylindre (2), comprenant une douille de tourillon (3) montée sur le tourillon de cylindre (2), à laquelle est attribué un chemin de roulement (5), une douille de palier (7) montée dans une empoise (6), des joints d'arbres radiaux comportant des lèvres radiales (13, 13'), attribués à l'empoise (6) via un support de fixation (11), qui coopèrent avec le chemin de roulement, et un agencement d'étanchéité (16) monté en amont par rapport aux joints d'arbres radiaux pour le serrage du cylindre (4), dans lequel le support de fixation (11) et les lèvres radiales (13, 13') sont réalisés en une seule pièce pour faire office d'élément d'étanchéité (8), et forment une unité avec une lèvre d'étanchéité (15, 15') de l'agencement d'étanchéité (16) qui est reliée en étanchéité de manière amovible avec l'empoise (6), et dans lequel le support de fixation (11) présente une saillie (12) à l'extrémité de laquelle sont disposées les lèvres radiales (13, 13') qui sont reliées en étanchéité avec le chemin de roulement (5), et le support de fixation (11) et la saillie (12) présentent une première liaison (20) par laquelle on peut guider des quantités minimes d'huile à des fins de graissage quantitatif minimal des lèvres radiales (13) qui se détournent du palier, à partir d'une poche de captage d'huile (21), dans la zone du palier, dans l'espace ménagé entre les deux lèvres radiales (13, 13'), et dans lequel au moins la saillie (12) présente une deuxième liaison (25) par laquelle on peut évacuer de l'huile en excès à partir de l'espace ménagé entre les lèvres radiales (13, 13'), et dans lequel on peut régler, via la dimension de l'ouverture de la poche de captage d'huile (21), la quantité des particules d'huile captées, et via l'inclinaison et la profondeur de la poche de captage d'huile (21), on peut déterminer la quantité de l'huile disponible dans la poche de captage d'huile (21).

2. Dispositif selon la revendication 1, **caractérisé en ce que** l'élément d'étanchéité (8) et la lèvre d'étanchéité (15) de l'agencement d'étanchéité (16) sont réalisés en une seule pièce.

3. Dispositif selon la revendication 1, **caractérisé en ce que** la lèvre d'étanchéité (15') de l'agencement d'étanchéité (16) peut être reliée de manière amovible à l'élément d'étanchéité (8).

4. Dispositif selon l'une quelconque des revendications 1 à 3, **caractérisé en ce que** le support de fixation (11) et/ou les lèvres radiales (13, 13') et/ou la lèvre d'étanchéité (15, 15') de l'agencement d'étanchéité (16) sont constitués par des matières différentes.

5. Dispositif selon l'une quelconque des revendications 1 à 4, **caractérisé en ce que** le support de fixation (11) et/ou les lèvres radiales (13, 13') et/ou la lèvre d'étanchéité (15, 15') présentent des renforcements.

6. Dispositif selon la revendication 5, **caractérisé en ce que**, à l'état monté de l'élément d'étanchéité (8), la première liaison (20) est disposée dans la zone respectivement supérieure des lèvres radiales (13, 13') à environ 12:00 et **en ce que** la deuxième liaison (25) est disposée dans la zone respectivement inférieure des lèvres radiales (13, 13') peu avant ou peu après 6:00.

7. Dispositif selon l'une quelconque des revendications 1 à 6, **caractérisé en ce que** l'agencement d'étanchéité (16) présente un profil (17) en forme de L qui est monté sur le côté frontal (18) du cylindre (4), **en ce qu'**on réalise un labyrinthe (19) entre les branches du profil (17) en forme de L et l'élément d'étanchéité (8), et **en ce que** la lèvre d'étanchéité (15, 15') vient s'appliquer en étanchéité contre une branche du profil (17) en forme de L.

8. Dispositif selon l'une quelconque des revendications 1 à 7, **caractérisé en ce que** l'élément d'étanchéité (8) peut être ajusté à des fins de compensation du décalage concernant l'empoise (6).

9. Dispositif selon la revendication 8, **caractérisé en ce que** l'élément d'étanchéité (8) est disposé dans l'empoise (6) en position excentrée à concurrence d'une valeur déterminée.

10. Dispositif selon l'une quelconque des revendications 1 à 9, **caractérisé en ce que**, trouve une utilisation, à la place de la douille de tourillon et du tourillon de palier d'un palier à glissement, un agencement de palier à roulement.
